# FASCICULE DE BREVET EUROPEEN

(11) **EP 3 429 870 B1**
(45) Date de publication et mention de la délivrance du brevet: **14.07.2021**
(21) Numéro de dépôt: 17711208.3
(22) Date de dépôt: 17.03.2017
(51) Int. Cl.: B60B 17/00

(54) **ROUE DE VEHICULE FERROVIAIRE ET PROCEDE DE FABRICATION CORRESPONDANT**
SCHIENENFAHRZEUGRAD UND ZUGEHÖRIGES HERSTELLUNGSVERFAHREN
RAIL VEHICLE WHEEL AND CORRESPONDING PRODUCTION METHOD

(30) Priorité: 17.03.2016 FR 1652275
(43) Date de publication de la demande: 23.01.2019
(73) Titulaire: MG-Valdunes, 59125 Trith Saint Leger (FR)
(72) Inventeur: DEMILLY, François, 59130 Lambersart (FR); GHEWY, Franck, 59530 Le Quesnoy (FR); INGOUF, Thierry, 59240 Dunkerque (FR)
(74) Mandataire: Lavoix
(86) Numéro de dépôt international: PCT/EP2017/056453
(87) Numéro de publication internationale: WO 2017/158187

(56) Documents cités:
- WO-A1-2005/072988
- GB-A- 796 137
- US-A- 2 239 077
- US-A- 2 252 335

## Description

La présente invention concerne le domaine des roues de véhicule ferroviaire, et en particulier les roues de véhicule ferroviaire à suspension intégrée.

EP 0 893 279 A1 divulgue une roue de véhicule ferroviaire à suspension intégrée, comprenant une jante et un bandage entourant la jante, le bandage étant supporté par la jante par l'intermédiaire de deux anneaux élastiques réalisés en matériau élastomère, afin d'assurer une suspension entre la jante et le bandage pour améliorer le confort de roulage.

Pour assurer le centrage d'un des deux anneaux par rapport à la jante, cet anneau est muni d'une pluralité de plots répartis sur la circonférence de l'anneau et la jante est munie d'encoches réparties sur la circonférence de la jante, chaque plot s'insérant dans une encoche respective.

Néanmoins, les encoches doivent être usinées avec précision dans la jante, ce qui rend la fabrication plus difficile et augmente son coût. Cela impose en outre de prévoir des marges de sécurité importantes, ce qui augmente le prix de revient de la roue.

GB796137A divulgue un procédé de fabrication d'une roue de véhicule ferroviaire dans lequel des tiges de centrage sont insérées dans des orifices de couronnes d'une jante et des orifices d'un bandage, des anneaux élastiques sont moulé *in situ*, puis les tiges de centrage étant retirées.

WO2005/072988A1, US2239077A et US2252335A divulguent des roues de véhicule ferroviaire comprenant des vis ou des boulons de fixation traversant des couronnes d'une jante, des anneaux élastiques et un bandage sans réaliser de centrage du bandage et/ou des anneaux élastiques. US2239077A divulgue en outre l'utilisation temporaire de tiges de centrage pour l'assemblage de la roue de véhicule ferroviaire.

Un des buts de l'invention est de proposer une roue de véhicule ferroviaire à suspension intégrée qui soit facile à fabriquer et économique à fabriquer.

A cet effet, l'invention propose une roue de véhicule ferroviaire selon la revendication 1. Des caractéristiques optionnelles de la roue de véhicule ferroviaire sont définies aux revendications 2 à 10.

L'invention concerne également un procédé de fabrication d'une roue de véhicule ferroviaire selon la revendication 11. Des modes de mise en œuvre particuliers sont définis aux revendications 12 et 13.

L'invention et ses avantages seront mieux compris à la lecture de la description qui va suivre, donnée uniquement à titre d'exemple, et faite en référence aux dessins annexés, sur lesquels :
- les Figures 1 et 2 sont des demi-vues en coupe d'une roue de véhicule ferroviaire à suspension intégrée en cours d'assemblage et après assemblage ;
- les Figures 3 et 4 sont des demi-vues en coupe de roues de véhicule ferroviaire à suspension intégrée assemblées, selon des variantes.

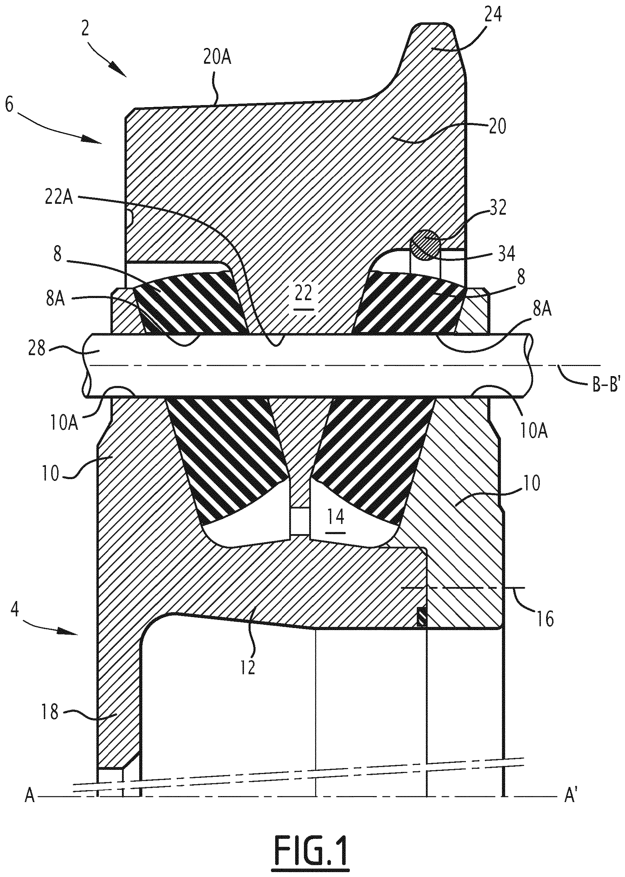

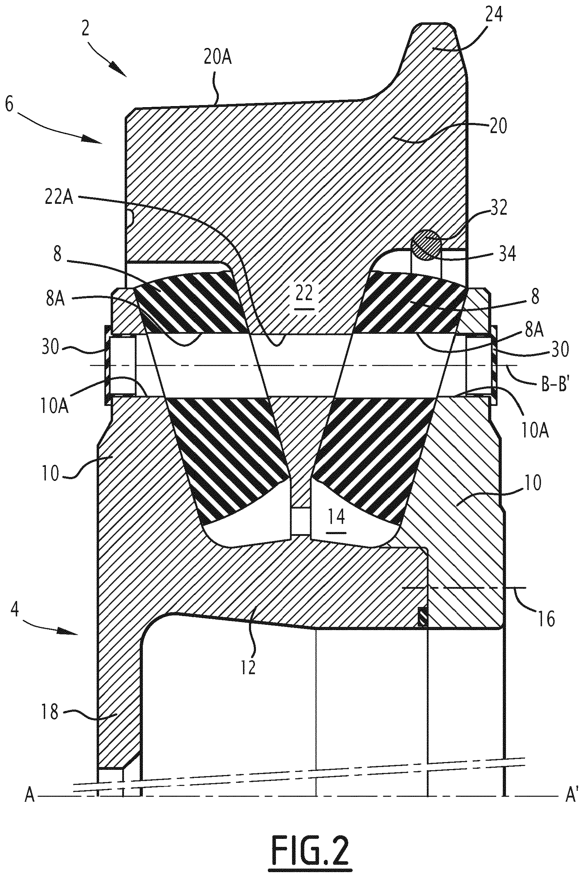

La roue 2 de véhicule ferroviaire des Figures 1 et 2 est prévue pour être montée sur un véhicule ferroviaire pour le guidage du véhicule le long d'un rail ferroviaire.

La roue 2 présente un axe central A-A' de rotation autour duquel la roue 2 tourne en fonctionnement. La roue 2 comprend une jante 4, un bandage 6 entourant la jante 4, et deux anneaux élastiques 8 interposés entre la jante 4 et le bandage 6. La jante 4, le bandage 6 et les anneaux élastiques 8 sont annulaires, coaxiaux et centrés sur l'axe central A-A' de la roue 2.

La jante 4 est en appui sur le bandage 6 par l'intermédiaire des deux anneaux élastiques 8. Les anneaux élastiques 8 assurent la suspension de la jante 4 par rapport au bandage 6 du fait de leur élasticité. Les anneaux élastiques 8 forment une suspension intégrée à la roue 2.

La jante 4 est en appui sur le bandage 6 par l'intermédiaire des deux anneaux élastiques 8 sensiblement radialement par rapport à l'axe centrale A-A'.

Dans un mode de réalisation, la jante 4 et le bandage 6 sont chacun réalisés en métal et les anneaux élastiques 8 sont réalisés en matériau élastomère. En option, au moins un anneau élastique 8 comprend un corps en matériau élastomère et des inserts métalliques noyés dans le corps en matériau élastomère.

La jante 4 comprend deux couronnes 10 coaxiales délimitant axialement entre elles un espace annulaire 14. L'espace annulaire 14 présente un profil de forme générale en U. L'espace annulaire 14 est fermé axialement par les couronnes 10 et ouvert radialement vers l'extérieur. Les deux couronnes 10 sont disposées en regard l'une de l'autre.

Les deux couronnes 10 sont deux pièces distinctes l'une de l'autre et sont liées rigidement l'une à l'autre. Les deux couronnes 10 sont assemblées l'une sur l'autre par exemple par emmanchement à force et/ou par l'intermédiaire de vis.

La jante 4 comprend ici une partie axiale 12 tubulaire reliant les deux couronnes 10. La partie axiale 12 est venue de matière avec une couronne 10 (celle de gauche sur les Figures 1 et 2) et fixée sur l'autre couronne (celle de droite sur les Figures 1 et 2). La fixation est réalisée ici par emmanchement à force. En variante ou en option, la fixation est réalisée par vissage, par l'intermédiaire d'une pluralité de vis réparties sur la circonférence de la jante 4, et symbolisées ici par des traits mixtes 16.

En variante, les deux couronnes 10 sont distinctes de la partie axiale 12, chaque couronne 10 étant fixée sur la partie axiale 12, par exemple par emmanchement à force sur la partie axiale 12 et/ou par vissage sur la partie axiale 12. Encore en variante une couronne 10 est fixée directement sur l'autre couronne 10 sans partie axiale tubulaire entre les deux couronnes 10, par exemple par emmanchement à force et/ou par vissage.

La jante 4 comprend ici rebord interne 18 en saillie radialement vers l'intérieur à partir d'une couronne 10, ici celle portant la partie axiale 12, par exemple pour le montage de la jante 4 sur un essieu.

Chaque anneau élastique 8 prend ici appui sur une surface d'appui d'une couronne 10 respective, laquelle surface d'appui est de forme générale sensiblement tronconique centrée sur l'axe central A-A'.

Le bandage 6 comprend une partie de roulement 20, destinée à rouler sur un rail, et une partie d'appui 22, en appui sur la jante 4 par l'intermédiaire des deux anneaux élastiques 8.

La partie de roulement 20 entoure la partie d'appui 22. La partie de roulement 20 et la partie d'appui 22 sont annulaires et centrée sur l'axe central A-A'. La partie de roulement 20 et la partie d'appui 22 sont de préférence réalisées en une seule pièce de matière.

La partie de roulement 20 présente une surface de roulement 20A tournée radialement vers l'extérieur. La partie de roulement 20 est munie d'un bourrelet 24 annulaire faisant saillie radialement vers l'extérieur par rapport à la surface de roulement 20A pour assurer le guidage latéral de la roue 2 le long d'un rail sur lequel la roue roule. Le bourrelet 24 s'étend continûment sur toute la circonférence de la partie de roulement 20.

La partie d'appui 22 est engagée dans l'espace de réception délimité entre les deux couronnes 10. La partie d'appui 22 est située axialement entre les deux couronnes 10. La partie d'appui 22 est en appui sur chaque couronne 10 par l'intermédiaire d'un anneau élastique 8 respectif. Chaque anneau élastique 8 est interposé entre la partie d'appui 22 du bandage 6 et une couronne 10 respective de la jante 4.

La partie d'appui 22 s'étend radialement vers l'intérieur du bandage 6 à partir de la partie de roulement 20. La partie d'appui 22 présente en section un profil en forme de coin s'effilant radialement vers l'intérieur.

La partie d'appui 22 prend ici appui sur chaque anneau élastique 8 par une surface d'appui respective de la partie d'appui 22, laquelle surface d'appui est de forme générale sensiblement tronconique par rapport à l'axe central A-A'.

La roue 2 comprend un empilement axial annulaire formé successivement d'une couronne 10, d'un anneau élastique 8, de la partie d'appui 22 du bandage 6, de l'autre anneau élastique 8 et de l'autre couronne 10.

Les deux couronnes 10, les deux anneaux élastiques 8 et la partie d'appui 22 du bandage 6 sont sensiblement agencés symétriquement par rapport à un plan médian perpendiculaire à l'axe centrale A-A'.

La roue 2 comprend au moins un jeu d'orifices de centrage 26, chaque jeu d'orifices de centrage 26 comprenant plusieurs orifices de centrage coaxiaux centrés sur un axe d'alignement B-B' parallèle à l'axe central A-A' de la roue 2, chaque jeu d'orifices 20 de centrage incluant au moins un orifice de centrage ménagé dans une couronne 10, au moins un orifice de centrage traversant un anneau élastique 8, et un orifice de centrage ménagé dans la partie d'appui 22 du bandage 6, pour le centrage mutuel des composants de la roue 2 munie des orifices de centrage.

L'axe d'alignement B-B' des orifices de centrage 10A, 8A, 22A de chaque jeu d'orifice de centrage 26 est distinct de l'axe central A-A'.

De préférence, la roue 2 comprend plusieurs jeux d'orifices de centrage 26, réparties sur la circonférence de la roue 2, de préférence régulièrement. Dans un mode de réalisation particulier, la roue 2 comprend trois jeux d'orifices de centrage 26 régulièrement répartis à 120° sur la circonférence de la roue 2.

La roue 2 des Figures 1 et 2 comprend un jeux d'orifices de centrage 26 comprenant un orifice de centrage 10A traversant ménagé dans chaque couronne 10, un orifice de centrage 8A traversant ménagé dans chaque anneau 8 et un orifice de centrage 22A traversant ménagé dans la partie d'appui 22 du bandage 6.

Comme illustré sur la Figure 1, chaque jeu d'orifices de centrage 26 permet l'insertion d'une tige de centrage 28 à travers chacun des orifices de centrage 10A, 8A, 22A de ce jeu d'orifices de centrage 26 pendant l'assemblage de la roue 2, pour le centrage mutuel des composants (couronnes 10, anneaux élastiques 8 et bandage 6) de la roue 2.

Pour l'assemblage de la roue 2, une tige de centrage 28 est prévue pour chaque jeu d'orifices de centrage 26, et les composants de la roue 2 sont empilés les uns sur les autres en engageant chaque tige de centrage 28 dans les orifices de centrage 10A, 8A, 22A d'un jeu d'orifices de centrage 26.

En particulier, les composants de la roue 2 sont empilés successivement comme suit, en étant chacun enfilé sur les tiges de centrage 28 : une des deux couronnes 10, un des deux anneaux élastique 8, le bandage 18, l'autre anneau élastique 8 puis l'autre couronne 10.

Lors de l'assemblage de la roue 2 des Figures 1 et 2, une fois l'empilement réalisé et les tiges de centrage 28 étant engagées dans les orifices de centrage 10A, 8A, 22A, les deux couronnes 10 sont assemblées l'une sur l'autre par emmanchement à force.

Comme illustré sur la Figure 2, après assemblage des composants de la roue 2, les tiges de centrage 28 sont retirées.

De préférences, des bouchons 30 de fermeture sont disposés sur chacun des orifices de centrage 10A des couronnes 10. Ceci évite l'entrée de débris dans les orifices de centrage 10A, 8A, 22A. Cette configuration n'est fait pas partie de l'objet des revendications ci-jointes.

En variante faisant partie de l'objet revendiqué, il est possible de munir la roue 2 de tiges de centrage insérées à demeure dans les orifices de centrage 10A, 8A, 22A de chaque jeu d'orifices de centrage 26.

Une tige de centrage insérée à demeure dans la roue 2 est par exemple réalisée en matériau élastomère. Une telle tige de centrage n'entrave pas le fonctionnement de la suspension intégrée de la roue 2 formée par les anneaux élastiques 8.

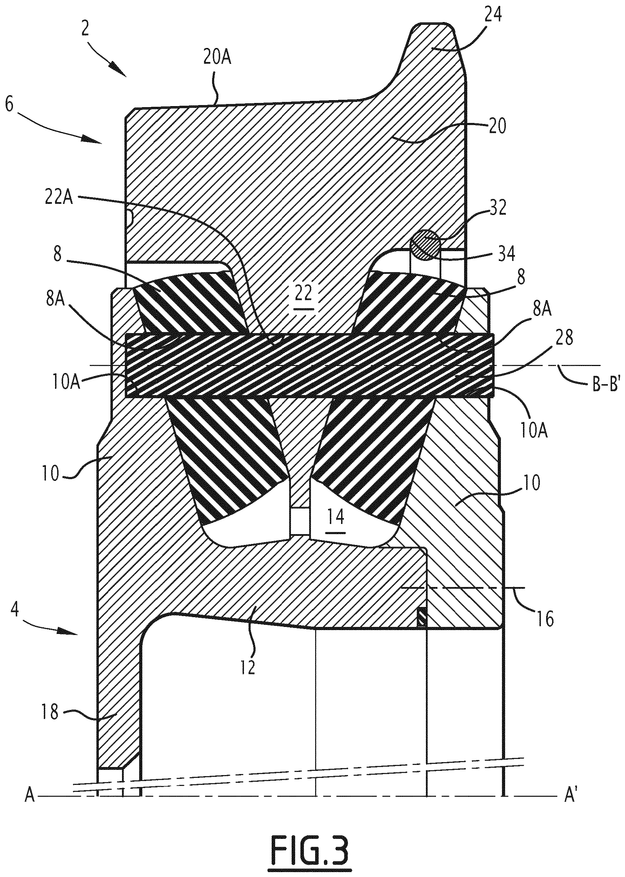

La roue 2 de la Figure 3 diffère de celle des Figures 1 et 2 en ce qu'un jeu d'orifice de centrage 26 comprend un orifice de centrage 10A, ménagé dans une des couronnes 10, qui est borgne. Le jeu d'orifice de centrage 26 comprend un orifice de centrage 10A ménagé dans l'autre couronne 10, un orifice de centrage 8A ménagé dans chacun des anneaux 8 et un orifice de centrage 22A ménagé dans la partie d'appui 22 qui sont tous traversant. L'orifice de centrage 10A borgne débouche dans l'espace annulaire délimitant entre les deux couronnes 10 et est formé du côté opposé, i.e. vers l'extérieur de la roue 2.

La couronne 10 dont l'orifice de centrage 10A est borgne (celle de gauche sur la Figure 3) est ici la couronne 10 venue de matière avec la partie axiale 12. En variante, il s'agit de l'autre couronne 10.

La roue 2 de la Figure 3 comprend une tige de centrage 28 insérée à demeure dans les orifices de centrages 10A, 8A, 22A du jeu d'orifices de centrage 26. La tige de centrage 28 est de préférence réalisée en matériau élastomère.

La tige de centrage 28 est engagée dans chacun des orifices de centrages 10A, 8A, 22A du jeu d'orifices de centrage 26. La tige de centrage 28 traverse la couronne 10 munie d'un orifice de centrage 10A traversant, les deux anneaux élastique 8 et le bandage 6, et est engagée dans l'orifice de centrage 10A borgne de la couronne 10 munie d'un orifice de centrage 10A borgne.

La tige de centrage 28 restant à demeure ferme les orifices de centrage 10A, 8A, 22A et évite l'entrée de débris.

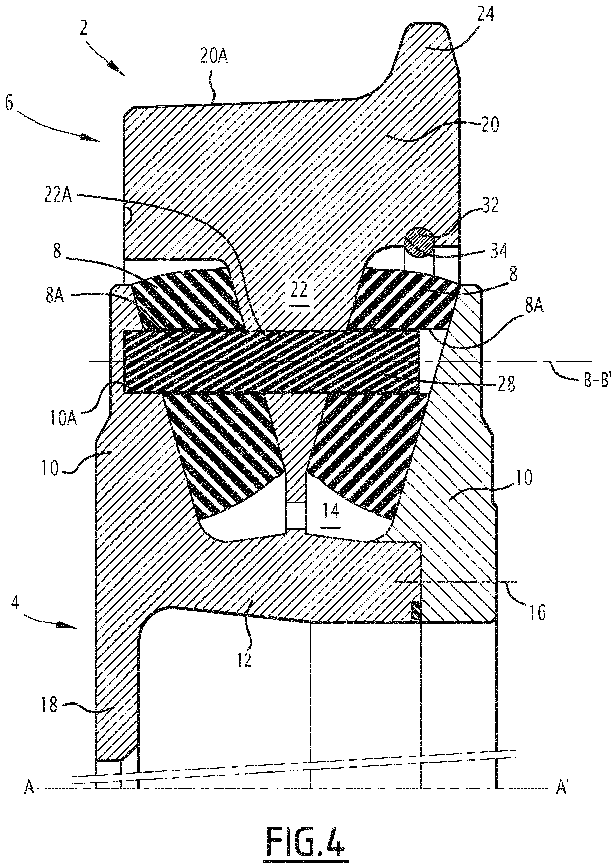

La roue 2 de la Figure 4 diffère de celle de la Figure 3 en ce qu'elle comprend un jeu d'orifice de centrage 26 qui comprenant un orifice de centrage 10A ménagé dans une des deux couronnes 10, l'autre couronne 10 étant dépourvue d'orifice de centrage aligné avec deux du jeu d'orifice de centrage 26.

Le jeu d'orifice de centrage 26 comprend un orifice de centrage 8A dans chaque anneau 8 et un orifice de centrage 22A dans la partie d'appui 22 du bandage 6. L'orifice de centrage 10A ménagé dans une des deux couronnes 10 est borgne. Les orifices de centrage 8A, 22A ménagés dans les anneaux élastiques 8 et dans la partie d'appui 22 sont traversant.

La roue 2 comprend une tige de centrage 28 insérée à demeure dans les orifices de centrage 10A, 8A et 22A du jeu d'orifices de centrage 26.

Le jeu d'orifice de centrage 26 assure le centrage des anneaux élastiques 8 et du bandage 6 par rapport à une seule des deux couronnes 10, et l'autre couronne 10 étant centrée sur la couronne 10 munie d'un orifice de centrage du fait de l'assemblage des couronnes 10 entre elles.

Un procédé de fabrication d'une roue selon l'une des Figures 1 à 4 comprend :
- la prévision d'au moins un jeu d'orifices de centrage 26 comprenant plusieurs orifices de centrage alignés, incluant au moins un orifice de centrage 10A ménagé dans une couronne 10, au moins un orifice de centrage 8A ménagé dans un anneau élastique 8, et un orifice de centrage 22A ménagé dans la partie d'appui 22 du bandage 6;
- l'empilement axial des couronnes, du bandage et des anneaux élastique en insérant une tige de centrage dans les orifices de centrage 10A, 8A, 22A de chaque jeux de orifice de centrage 26 ; et
- la fixation des couronnes 10 entre elles, par exemple par emmanchement à force et/ou par vissage, directement l'une sur l'autre ou par l'intermédiaire d'une pièce intermédiaire, par exemple une partie axiale de la jante 4, distinctes des couronnes 10 ou venue de matière avec l'une des deux couronnes 10.

Comme indiqué précédemment, dans un mode de mise en œuvre, au moins une tige de centrage 28 est laissée engagée dans chacun des orifices de centrage 10A, 8A, 22A d'un jeu d'orifices de centrage 26 et/ou au moins une tige de centrage 28 est extraite des orifices de centrage 10A, 8A, 22A d'un jeu d'orifices de centrage 26 après la fixation des couronnes 10 entre elles.

Comme illustrée sur les Figures 1 à 4, la roue possède en option un jonc antivibratoire 32 qui est inséré dans une gorge ménagée sur le bandage. Le jonc antivibratoire 32 a pour fonction d'absorber des vibrations qui pourraient être générées lorsque la roue roule sur le rail. Le jonc antivibratoire 32 est ici disposé dans une gorge de réception 34 ménagée dans une surface de la partie de roulement 20 tournée radialement vers l'intérieur. La gorge de réception 34 est ici située axialement en regard du bourrelet 24.

La prévision de jeux d'orifices de centrage 26 dans les composants de la roue permet d'assembler la roue en assurant un positionnement centré précis des différents composants. Le retrait d'une tige de centrage 28 après assemblage ou l'utilisation d'une tige de centrage 28 élastique permet de ne pas entraver le fonctionnement de la suspension intégrée de la roue 2, formée par les anneaux élastiques 8 interposés entre la jante 4 et le bandage 6 de roulement.

La prévision des bouchons 30 permet également d'éviter l'entrée de débris. Une tige de centrage 28 laissée à demeure dans la roue 2 évite l'entrée de débris dans les orifices de centrage dans lesquels la tige de centrage 28 est engagée.

La prévision d'un orifice de centrage 10A borgne dans au moins une des deux couronnes 10 et/ou la prévision d'au moins une couronne 10 dépourvue d'orifice de centrage aligné avec ceux d'un jeu d'orifice de centrage 26 prévus dans l'autre couronne 10, dans les anneaux élastiques 8 et dans le bandage 6, permet de fermer le jeux d'orifice de centrage 26 après assemblage de la roue 2 pour éviter l'entrée de débris. Une tige de centrage 28 laissée à demeure de la roue 2 permet d'assurer le centrage notamment dans le cas où un jeu d'orifice de centrage 26 ne comprend pas d'orifice de centrage traversant ménagé dans une couronne 10.

## Revendications

1. Roue de véhicule ferroviaire présentant un axe central (A-A') de rotation, la roue (2) comprenant une jante (4) possédant deux couronnes (10) coaxiales délimitant entre elles un espace annulaire, un bandage (6) entourant la jante (4) et comprenant une partie d'appui (22) engagée dans l'espace annulaire entre les deux couronnes (10), et deux anneaux élastiques (8), chaque anneau élastique (8) étant interposé axialement entre la partie d'appui (22) et une couronne (10) respective, la partie d'appui (18) étant en appui sur les couronnes (10) par l'intermédiaire des anneaux élastiques (8), la roue comprenant au moins un jeu d'orifices de centrage (26), chaque jeu d'orifices de centrage (26) comprenant plusieurs orifices de centrage alignés suivant un axe d'alignement (B-B') parallèle à l'axe central (A-A'), chaque jeu d'orifices de centrage (26) incluant au moins un orifice de centrage (10A) ménagé dans une couronne (10), au moins un orifice de centrage (8A) ménagé dans un anneau élastique (8), et un orifice de centrage (22A) ménagé dans la partie d'appui (22), la roue de véhicule ferroviaire comprenant une tige de centrage (28) engagée dans chacun des orifices de centrage (10A, 8A, 22A) d'au moins un dit jeu d'orifices de centrage (26).

2. Roue de véhicule ferroviaire selon la revendication 1, comprenant au moins un jeu d'orifices de centrage (26) comprenant un orifice de centrage (8A) ménagé dans chaque anneau élastique (8).

3. Roue de véhicule ferroviaire selon la revendication 1 ou 2, comprenant au moins un jeu d'orifices de centrage (26) dans lequel chaque orifice de centrage (8A) ménagé dans un anneau élastique (8) est traversant.

4. Roue de véhicule ferroviaire selon l'une quelconque des revendications précédentes, comprenant au moins un jeu d'orifices de centrage comprenant un orifice de centrage traversant ménagé dans au moins une des deux couronnes (10).

5. Roue de véhicule ferroviaire selon l'une quelconque des revendications précédentes comprenant au moins un jeu d'orifices de centrage (26) comprenant un orifice de centrage (10A) traversant ménagé dans chaque couronne (10), un orifice de centrage (8A) traversant ménagés dans chaque anneau élastique (8) et un orifice de centrage traversant ménagé dans la partie d'appui (22).

6. Roue de véhicule ferroviaire selon l'une quelconque des revendications 1 à 4, comprenant au moins un jeu d'orifices de centrage (26) comprenant un orifice de centrage (10A) ménagé dans une des deux couronnes (10), un orifice de centrage (8A) traversant ménagé dans un des deux anneaux élastiques (8), un orifice de centrage (22A) traversant ménagé dans la partie d'appui (22), un orifice de centrage (8A) ménagé dans l'autre anneau élastique (8), l'autre couronne étant dépourvue d'orifice de centrage alignés avec ceux de ce jeu d'orifices de centrage (26).

7. Roue de véhicule ferroviaire selon l'une quelconque des revendications 1 à 4, comprenant au moins un jeu d'orifices de centrage (26) comprenant un orifice de centrage (10A) borgne ménagé dans une des deux couronnes (10), un orifice de centrage (8A) traversant ménagé dans un des deux anneaux élastiques (8), un orifice de centrage (22A) traversant ménagé dans la partie d'appui (22), un orifice de centrage (8A) traversant ménagé dans l'autre anneau élastique (8), et un orifice de centrage (10A) traversant ménagé dans l'autre couronne (10).

8. Roue de véhicule ferroviaire selon l'une quelconque des revendications 1 à 4, dans laquelle au moins un jeu d'orifices de centrage (26) comprend un orifice de centrage (10A), ménagé dans une des couronnes (10), qui est borgne.

9. Roue de véhicule ferroviaire selon l'une quelconque des revendications précédentes, dans laquelle ladite tige de centrage (28) est réalisée en un matériau élastique.

10. Roue de véhicule ferroviaire selon l'une quelconque des revendications précédentes, dans laquelle ladite tige de centrage (28) est réalisée en matériau élastomère.

11. Procédé de fabrication d'une roue (2) de véhicule ferroviaire présentant un axe central (A-A') de rotation, la roue (2) comprenant une jante (4) possédant deux couronnes (10) délimitant entre elle un espace annulaire, un bandage (6) entourant la jante (4) et comprenant une partie d'appui (22) engagée dans l'espace annulaire entre les deux couronnes (10), et deux anneaux élastiques (8), chaque anneau élastique (8) étant interposé axialement entre la partie d'appui (22) et une couronne (10) respective, la partie d'appui (18) étant en appui sur les couronnes (10) par l'intermédiaire des anneaux élastiques (8), le procédé comprenant :
- la prévision d'au moins un jeu d'orifices de centrage (26) incluant au moins un orifice de centrage (10A) ménagé dans une couronne (10), au moins un orifice de centrage (8A) ménagé dans un anneau élastique (8), et un orifice de centrage (22A) ménagé dans la partie d'appui (22) du bandage ;
- l'empilement axial des couronnes (10), du bandage (6) et des anneaux élastique (8) en insérant une tige de centrage (28) dans les orifices de centrage (10A, 8A, 22A) de chaque jeux d'orifices de centrage (26) ; et
- la fixation des couronnes (10) entre elles
dans lequel au moins une tige de centrage (28) est laissée engagée dans chacun des orifices de centrage (10A, 8A, 22A) d'un jeu d'orifices de centrage (26) après la fixation des couronnes (10) entre elles.

12. Procédé de fabrication selon la revendication 11, dans lequel ladite au moins une tige de centrage (28) est réalisée en un matériau élastique.

13. Procédé de fabrication selon la revendication 11 ou 12, dans lequel ladite au moins une tige de centrage (28) est réalisée en matériau élastomère.

## Patentansprüche

1. Rad für ein Schienenfahrzeug, welches eine zentrale Drehachse (A-A') hat, wobei das Rad (2) aufweist eine Felge (4), welche zwei koaxiale Kränze (10) hat, welche zwischen sich einen ringförmigen Raum definieren, einen Radreifen (6), welcher die Felge (4) umgibt und welcher einen Stützabschnitt (22) aufweist, welcher in den ringförmigen Raum zwischen den beiden Kränzen (10) eingreift, und zwei elastische Ringe (8), wobei jeder elastische Ring (8) axial zwischen dem Stützabschnitt (22) und einem jeweils zugeordneten Kranz (10) angeordnet ist, wobei der Stützabschnitt (18) mittels der elastischen Ringe (8) an den Kränzen (10) abgestützt ist, wobei das Rad zumindest einen Satz Zentrieröffnungen (26) aufweist, wobei jeder Satz Zentrieröffnungen (26) mehrere Zentrieröffnungen aufweist, welche entlang einer Ausrichtungsachse (B-B'), welche parallel zur zentralen Achse (A-A') ist, ausgerichtet sind, wobei jeder Satz Zentrieröffnungen (26) aufweist zumindest eine Zentrieröffnung (10A), welche in einem Kranz (10) bereitgestellt ist, zumindest eine Zentrieröffnung (8A), welche in einem elastischen Ring (8) bereitgestellt ist, und eine Zentrieröffnung (22A), welche im Stützabschnitt (22) bereitgestellt ist, wobei das Rad für ein Schienenfahrzeug eine Zentrierstange (28) aufweist, welche in jede der Zentrieröffnungen (10A, 8A, 22A) von zumindest einem besagten Satz Zentrieröffnungen (26) eingreift.

2. Rad für ein Schienenfahrzeug gemäß Anspruch 1, welches zumindest einen Satz Zentrieröffnungen (26) aufweist, welcher eine Zentrieröffnung (8A) aufweist, welche in jedem elastischen Ring (8) bereitgestellt ist.

3. Rad für ein Schienenfahrzeug gemäß Anspruch 1 oder 2, welches zumindest einen Satz Zentrieröffnungen (26) aufweist, wobei jede Zentrieröffnung (8A), welche in einem elastischen Ring (8) bereitgestellt ist, durchgehend ist.

4. Rad für ein Schienenfahrzeug gemäß irgendeinem der vorherigen Ansprüche, welches zumindest einen Satz Zentrieröffnungen aufweist, welcher eine durchgehende Zentrieröffnung aufweist, welche in zumindest einem der zwei Kränze (10) bereitgestellt ist.

5. Rad für ein Schienenfahrzeug gemäß irgendeinem der vorherigen Ansprüche, welches zumindest einen Satz Zentrieröffnungen (26) aufweist, welcher aufweist eine durchgehende Zentrieröffnung (10A), welche in jedem Kranz (10) bereitgestellt ist, eine durchgehende Zentrieröffnung (8A), welche in jedem elastischen Ring (8) bereitgestellt sind, und eine durchgehende Zentrieröffnung, welche im Stützabschnitt (22) bereitgestellt ist.

6. Rad für ein Schienenfahrzeug gemäß irgendeinem der Ansprüche 1 bis 4, welches zumindest einen Satz Zentrieröffnungen (26) aufweist, welcher aufweist eine Zentrieröffnung (10A), welche in einem der beiden Kränze (10) bereitgestellt ist, eine durchgehende Zentrieröffnung (8A), welche in einem der beiden elastischen Ringe (8) bereitgestellt ist, eine durchgehende Zentrieröffnung (22A), welche im Stützabschnitt (22) bereitgestellt ist, eine Zentrieröffnung (8A), welche im anderen elastischen Ring (8) bereitgestellt ist, wobei der andere Kranz ohne Zentrieröffnung ist, welche mit denen von diesem Satz Zentrieröffnungen (26) ausgerichtet sind.

7. Rad für ein Schienenfahrzeug gemäß irgendeinem der Ansprüche 1 bis 4, welches zumindest einen Satz Zentrieröffnungen (26) aufweist, welcher aufweist eine Blind-Zentrieröffnung (10A), welche in einem der beiden Kränze (10) bereitgestellt ist, eine durchgehende Zentrieröffnung (8A), welche in einem der beiden elastischen Ringe (8) bereitgestellt ist, eine durchgehende Zentrieröffnung (22A), welche im Stützabschnitt (22) bereitgestellt ist, eine durchgehende Zentrieröffnung (8A), welche im anderen elastischen Ring (8) bereitgestellt ist, und eine durchgehende Zentrieröffnung (10A), welche im anderen Kranz (10) bereitgestellt ist.

8. Rad für ein Schienenfahrzeug gemäß irgendeinem der Ansprüche 1 bis 4, wobei zumindest ein Satz Zentrieröffnungen (26) eine in einem der Kränze (10) bereitgestellte Zentrieröffnung (10A) aufweist, welche blind ist.

9. Rad für ein Schienenfahrzeug gemäß irgendeinem der vorherigen Ansprüche, wobei die besagte Zentrierstange (28) aus einem elastischen Material hergestellt ist.

10. Rad für ein Schienenfahrzeug gemäß irgendeinem der vorherigen Ansprüche, wobei die besagte Zentrierstange (28) aus einem Elastomer-Material hergestellt ist.

11. Verfahren zum Herstellen eines Rades (2) für ein Schienenfahrzeug, welches eine zentrale Drehachse (A-A') hat, wobei das Rad (2) aufweist eine Felge (4), welche zwei Kränze (10) hat, welche zwischen sich einen ringförmigen Raum definieren, einen Radreifen (6), welcher die Felge (4) umgibt und welcher einen Stützabschnitt (22) aufweist, welcher in den ringförmigen Raum zwischen den beiden Kränzen (10) eingreift, und zwei elastische Ringe (8), wobei jeder elastische Ring (8) axial zwischen dem Stützabschnitt (22) und einem jeweiligen Kranz (10) angeordnet ist, wobei der Stützabschnitt (18) mittels der elastischen Ringe (8) an den Kränzen (10) abgestützt ist, wobei das Verfahren aufweist:
- das Bereitstellen von zumindest einem Satz Zentrieröffnungen (26), welcher aufweist zumindest eine Zentrieröffnung (10A), welche in einem Kranz (10) bereitgestellt ist, zumindest eine Zentrieröffnung (8A), welche in einem elastischen Ring (8) bereitgestellt ist, und eine Zentrieröffnung (22A), welche im Stützabschnitt (22) des Radreifens bereitgestellt ist,
- das axiale Stapeln der Kränze (10), des Radreifens (6) und der elastischen Ringe (8) unter Einführung einer Zentrierstange (28) in die Zentrieröffnungen (10A, 8A, 22A) von jedem Satz Zentrieröffnungen (26) und
- das Befestigen der Kränze (10) aneinander,
wobei zumindest eine Zentrierstrange (28) im Eingriff in jeder der Zentrieröffnungen (10a, 8A, 22A) eines Satzes Zentrieröffnungen (26) belassen wird nach dem Befestigen der Kränze (10) aneinander.

12. Verfahren zum Herstellen gemäß Anspruch 11, wobei die besagte zumindest eine Zentrierstange (28) aus einem elastischen Material hergestellt ist.

13. Verfahren zum Herstellen gemäß Anspruch 11 oder 12, wobei die besagte zumindest eine Zentrierstange (28) aus einem Elastomer-Material hergestellt ist.

## Claims

1. A rail vehicle wheel having a central axis (A-A') of rotation, the wheel (2) comprising a rim (4) having two coaxial annular flanges (10) delimiting an annular space between them, a tire (6) surrounding the rim (4) and comprising a bearing portion (22) engaged in the annular space between the two annular flanges (10), and two resilient rings (8), each resilient ring (8) being interposed axially between the bearing portion (22) and a respective annular flange (10), the bearing portion (18) bearing on the annular flanges (10) via the resilient rings (8), the wheel comprising at least one set of centering holes (26), each set of centering holes (26) comprising several centering holes aligned along an alignment axis (B-B') parallel to the central axis (A-A'), each set of centering holes (26) including at least one centering hole (10A) provided in a annular flange (10), at least one centering hole (8A) provided in a resilient ring (8), and a centering hole (22A) provided in the bearing portion (22), the rail vehicle wheel comprising a centering rod (28) engaged in each of the centering holes (10A, 8A, 22A) of at least one said set of centering holes (26).

2. The rail vehicle wheel according to claim 1, comprising at least one set of centering holes (26) comprising a centering hole (8A) provided in each resilient ring (8).

3. The rail vehicle wheel according to claim 1 or 2, comprising at least one set of centering holes (26), wherein each centering hole (8A) provided in a resilient ring (8) is a through port.

4. The rail vehicle wheel according to any one of the preceding claims, comprising at least one set of centering holes comprising a through centering hole provided in at least one of the two annular flanges (10).

5. The rail vehicle wheel according to any one of the preceding claims, comprising at least one set of centering holes (26) comprising a through centering hole (10A) provided in each annular flange (10), a through centering hole (8A) provided in each resilient ring (8) and a through centering hole provided in the bearing portion (22).

6. The rail vehicle wheel according to any one of claims 1 - 4, comprising at least one set of centering holes (26) comprising a centering hole (10A) provided in one of the two annular flanges (10), a through centering hole (8A) provided in one of the two resilient rings (8), a through centering hole (22A) provided in the bearing portion (22), a centering hole (8A) provided in the other resilient ring (8), the other annular flange having no centering hole aligned with those of this set of centering holes (26).

7. The rail vehicle wheel according to any one of claims 1 - 4, comprising at least one set of centering holes (26) comprising a blind centering hole (10A) provided in one of the two annular flanges (10), a through centering hole (8A) provided in one of the two resilient rings (8), a through centering hole (22A) provided in the bearing portion (22), a through centering hole (8A) provided in the other resilient ring (8), and a through centering hole (10A) provided in the other annular flange (10).

8. The rail vehicle wheel according to any one of claims 1 - 4, wherein at least one set of centering holes (26) comprises a centering hole (10A), provided in one of the annular flanges (10), which is blind.

9. The rail vehicle wheel according to any one of the preceding claims, wherein said centering rod (28) is made from a resilient material.

10. The rail vehicle wheel according to any one of the preceding claims, wherein said centering rod (28) is made from an elastomeric material.

11. A method for manufacturing a rail vehicle wheel (2) having a central axis of rotation (A-A'), the wheel (2) comprising a rim (4) having two annular flanges (10) delimiting an annular space between them, a tire (6) surrounding the rim (4) and comprising a bearing portion (22) engaged in the annular space between the two annular flanges (10), and two resilient rings(8), each resilient ring (8) being interposed axially between the bearing portion (22) and a respective annular flange (10), the bearing portion (18) bearing on the annular flanges (10) via the resilient rings (8), the method comprising:
- providing at least one set of centering holes (26) including at least one centering hole (10A) provided in a annular flange (10), at least one centering hole (8A) provided in a resilient ring (8), and a centering hole (22A) provided in the bearing portion (22) of the tire;
- axially stacking the annular flanges (10), the tire (6) and the resilient rings (8) by inserting a centering rod (28) in the centering holes (10A, 8A, 22A) of each set of centering holes (26); and
- fastening the annular flanges (10) to one another
wherein at least one centering rod (28) is left engaged in each of the centering holes (10A, 8A, 22A) of a set of centering holes (26) after fastening the annular flanges (10) to one another..

12. The manufacturing method according to claim 11, wherein said at least one centering rod (28) is made from a resilient material.

13. The manufacturing method according to claim 11 or 12, wherein said at least one centering rod (28) is made from an elastomeric material.
